# EUROPEAN PATENT APPLICATION

(11) **EP 4 303 969 A2**
(43) Date of publication of application: **10.01.2024**
(21) Application number: 22203166.8
(22) Date of filing: 24.10.2022
(51) Int. Cl.: H01M 8/0273, H01M 8/0276, H01M 8/242, H01M 8/2483

(54) **CARTRIDGE ASSEMBLY**

(30) Priority: 06.07.2022 KR 20220083386
(71) Applicant: Hyundai Mobis Co., Ltd., Gangnam-gu Seoul 06141 (KR)
(72) Inventor: KIM, Chan Gi, 16891 Yongin-si (KR); CHOI, Hyun Kyu, 16891 Yongin-si (KR); KIM, Bae Jung, 16891 Yongin-si (KR); KIM, Hyun Jeong, 16891 Yongin-si (KR); KIM, Sun Hwi, 16891 Yongin-si (KR)
(74) Representative: Frenkel, Matthias Alexander

(57) **Abstract**

Disclosed is a cartridge assembly. The cartridge assembly includes a body part having an upper body opened upwards and downwards, and a lower body opened upwards and downwards, and coupled to the upper body to define an interior space, in which cells are stacked upwards and downwards, together with the upper body, and a cartridge including a cover part having an upper cover that covers an upper opening formed on an upper side of the upper body, and a lower cover that covers a lower opening formed on a lower side of the lower body, a plurality of cartridges are provided, and are stacked in an upward/downward direction, and each of the cartridges includes a connection part fixedly coupled to another cartridge disposed on an upper side or a lower side thereof to be adjacent thereto.

## Description

### CROSS-REFERENCE TO RELATED APPLICATION

This application claims the benefit of priority to Korean Patent Application No. 10-2022-0083386, filed in the Korean Intellectual Property Office on July 6, 2022, the entire contents of which are incorporated herein by reference.

### TECHNICAL FIELD

The present disclosure relates to a cartridge assembly.

### BACKGROUND

A unit fuel cell includes a separator (an air electrode and a hydrogen electrode) and a membrane electrode assembly (MEA), and an interior of the unit cell is divided into three parts of a hydrogen part, an air part, and a cooling part. The fluids (hydrogen, air, and cooling water) may independently flow due to a mutually sealed structure.

Meanwhile, because a target output cannot be achieved only with a unit cell, a fuel cell stack that may satisfy a target output is manufactured by repeatedly stacking and coupling a plurality of unit cells.

It is troublesome to repair a conventional fuel cell stack, and thus there is an inconvenience of having to disassemble an entire stack to replace specific cells. Furthermore, in the process, the separator may be deformed or the MEA may be damaged so that its function may be lost or costs may be increased. Furthermore, because a stack has to be replaced in a special environment, it may be rather reasonable to replace the entire stack.

Furthermore, because it is impossible to secure a sealing state of the unit cells before the conventional fuel cell stack is coupled, the MEA may be exposed to an outside when the fuel cell stack is disassembled in a repair and maintenance process, and thus a performance of the stack may be degraded.

Furthermore, according to the conventional fuel cell stack, buckling easily occurs in a process of stacking a plurality of unit cells, and an unbalance of the performance due to the buckling and a dissatisfaction of a sealing performance may occur.

### SUMMARY

The present disclosure has been made to solve the above-mentioned problems occurring in the prior art while advantages achieved by the prior art are maintained intact.

An aspect of the present disclosure provides a cartridge assembly, by which a stack may be easily repaired.

Another aspect of the present disclosure provides a cartridge assembly that may secure a sealing state of unit cells before a stack is coupled.

Another aspect of the present disclosure provides a cartridge assembly, by which cartridges may be easily aligned.

The technical problems to be solved by the present disclosure are not limited to the aforementioned problems, and any other technical problems not mentioned herein will be clearly understood from the following description by those skilled in the art to which the present disclosure pertains.

According to an aspect of the present disclosure, a cartridge assembly includes a body part having an upper body opened upwards and downwards, and a lower body opened upwards and downwards, and coupled to the upper body to define an interior space, in which cells are stacked upwards and downwards, together with the upper body, and a cartridge including a cover part having an upper cover that covers an upper opening formed on an upper side of the upper body, and a lower cover that covers a lower opening formed on a lower side of the lower body, a plurality of cartridges are provided, and are stacked in an upward/downward direction, and each of the cartridges includes a connection part fixedly coupled to another cartridge disposed on an upper side or a lower side thereof to be adjacent thereto.

In another example, the connection part may include an upper boss area having a shape that protrudes upwards from the upper side of the upper body, and a lower boss area having a shape that protrudes downwards from the lower side of the lower body, the upper boss area may protrude from an upper surface of the upper body toward the upper opening, and the lower boss area may protrude from a lower surface of the lower body toward the lower opening.

In another example, the connection part may include a lower recess area formed at a location of the lower body and the lower cover, which corresponds to a location of the upper boss area, to be recessed, and into which the upper boss area is inserted, and an upper recess area formed at a location of the upper body and the upper cover, which corresponds to a location of the lower boss area, to be recessed, and into which the lower boss area is inserted.

In another example, a plurality of upper boss areas and a plurality of upper recess areas may be formed, and may be alternately arranged along an upper periphery of the upper body.

In another example, the upper body may be disposed to surround an upper side of a side surface of the lower body, and the body part may include a coupling recess formed to be recessed downwards from an upper side of the lower body, and a coupling boss member protruding inwards from a location of the upper body, which corresponds to the coupling recess, and inserted into the coupling recess.

In another example, the body part may further include an alignment member protruding inwards from the lower body, and having a shape corresponding to an area, in which the cell is recessed.

In another example, the alignment member may include a pair of extension parts having a shape extending upwards, and spaced apart from each other, an insertion recess formed between the pair of extension parts, and a first insertion part having a shape corresponding to an insertion recess of an alignment member of another cartridge disposed on a lower side thereof to be inserted into the insertion recess, and protruding downwards from a location corresponding to the insertion recess.

In another example, the body part may further include a second insertion part protruding inwards from the upper side of the upper body, and having a shape corresponding to the insertion recess, the second insertion part may be disposed on a lower side of a first insertion part of another cartridge disposed on an upper side thereof, and an upward/downward length of the insertion recess may be larger than a sum of an upward/downward length of the second insertion part and an upward/downward length of the first insertion part.

In another example, the body part may further include a lower fastening member protruding laterally from the lower body, and having a fastening hole passing therethrough upwards and downwards, at a middle portion thereof, and an upper fastening member protruding from the upper body, extending downwards, and that is snap-fitted with the fastening hole.

In another example, the connection part may include a bolt head protruding to the upper side of the upper body, and a bolt body extending downwards from the bolt head, and that is inserted into a bolt insertion hole passing through the upper body and the lower body, an area of the bolt head may be larger than an area of the bolt insertion hole, and an upward/downward length of the bolt insertion hole may be larger than an upward/downward length of the bolt body.

In another example, the cartridge may further include a tension bar that surrounds a periphery of the body part, and the tension bar may include an upper contact part contacting an upper surface of the upper body, a lower contact part contacting a lower surface of the lower body, and an elastic part elastically connecting the upper contact part and the lower contact part.

In another example, the connection part may include a connection boss protruding upwards from the upper body, and a connection recess formed to have a shape corresponding to the connection boss, at a location of the lower body, which corresponds to the connection boss, the connection boss may be formed in an upper noncontact area that is an area of the upper body, which does not contact the upper contact part, and the connection recess may be formed in a lower noncontact area that is an area of the lower body, which does not contact the lower contact part.

In another example, a through-hole may be formed on a side surface of each of the upper body and the lower body to pass therethrough in an upward/downward direction, the connection part may include a snap-fit member passing through the through-hole upwards and snap-fitted with the through-hole, and the snap-fit member may include a protrusion area protruding upwards from the upper body.

In another example, the connection part may further include an connection opening formed on a lower side of the snap-fit member, and opened downwards, and the connection opening may be configured such that a protrusion area of another cartridge disposed on a lower side thereof to be adjacent thereto is inserted thereinto.

In another example, an upward/downward length of the connection opening may correspond to an upward/downward length of the protrusion area.

In another example, an upward/downward length of the through-hole may be shorter than an upward/downward length of the snap-fit member.

### BRIEF DESCRIPTION OF THE DRAWINGS

The above and other objects, features and advantages of the present disclosure will be more apparent from the following detailed description taken in conjunction with the accompanying drawings:
FIG. 1 is a view illustrating a cartridge assembly according to a first embodiment of the present disclosure;
FIG. 2 is a view illustrating a cartridge of a cartridge assembly according to a first embodiment of the present disclosure;
FIG. 3 is a view illustrating a state, in which an upper cover is removed in FIG. 2;
FIG. 4 is a view illustrating an upper body of a cartridge assembly according to a first embodiment of the present disclosure;
FIG. 5 is a view illustrating a lower body and a lower cover of a cartridge assembly according to a first embodiment of the present disclosure;
FIG. 6 is a view illustrating a connection part in a state before two cartridges disposed upwards and downwards are connected to each other;
FIG. 7 is a view illustrating a connection part in a state after two cartridges disposed upwards and downwards are connected to each other;
FIG. 8 is a view illustrating an alignment member and cells, viewed from a top;
FIG. 9 is a view illustrating an alignment member and a second insertion part positioned in a state before an upper body and a lower body are pressed and attached;
FIG. 10 is a view illustrating a state before alignment members of two cartridges disposed upwards and downwards are connected to each other;
FIG. 11 is a view illustrating a state after alignment members of two cartridges disposed upwards and downwards are connected to each other;
FIG. 12 is a conceptual view illustrating a cartridge assembly according to a second embodiment of the present disclosure;
FIG. 13 is a view illustrating a cartridge of a cartridge assembly according to a second embodiment of the present disclosure;
FIG. 14 is a conceptual view illustrating a cartridge assembly according to a third embodiment of the present disclosure;
FIG. 15 is a view illustrating a cartridge of a cartridge assembly according to a third embodiment of the present disclosure;
FIG. 16 is a view illustrating a state, in which an upper cover and a lower cover are removed from a cartridge of a cartridge assembly according to a third embodiment of the present disclosure;
FIG. 17 is a conceptual view illustrating a cartridge assembly according to a fourth embodiment of the present disclosure;
FIG. 18 is a view illustrating a cartridge of a cartridge assembly according to a fourth embodiment of the present disclosure;
FIG. 19 is a view obtained by reversing FIG. 18 upwards and downwards;
FIG. 20 is a view of a state, in which a connection part is removed in FIG. 18.
FIG. 21 is a view illustrating a connection part of a cartridge assembly according to a fourth embodiment of the present disclosure; and
FIG. 22 is a view obtained by reversing FIG. 21 upwards and downwards.

### DETAILED DESCRIPTION

Hereinafter, some embodiments of the present disclosure will be described in detail with reference to the exemplary drawings. In providing reference numerals to the constituent elements of the drawings, the same elements may have the same reference numerals even if they are displayed on different drawings. Further, in the following description of the present disclosure, a detailed description of known functions and configurations incorporated herein will be omitted when it may make the subject matter of the present disclosure rather unclear.

Hereinafter, a cartridge assembly according to the present disclosure is a cartridge assembly, in which a plurality of cartridges including fuel cells in interiors thereof are assembled. Embodiments of the cartridge assembly according to the present disclosure include an interior space, in which cells may be stacked, in an interior thereof, and are commonly characterized in that they have a structure that may be aligned between adjacent cartridges.

According to the present disclosure, because stacks may be manufactured by forming the cartridge assemblies in unit of cartridges, strength may be secured as compared with a case, in which only fuel cells are stacked to form a stack. Furthermore, because the fuel cells may not be exposed to an outside, degradation of performances of cells, which may occur due to exposure of a membrane electrode assembly (MEA) may be reduced.

Furthermore, according to the present disclosure, because a structure that may be aligned between adjacent cartridges is provided, a performance unbalance and a sealing performance dissatisfaction due to buckling that occurs in a process of stacking cells may be solved.

Hereinafter, the cartridges assemblies according to first to fourth embodiments will be described in detail.

### <Cartridge Assembly according to First Embodiment>

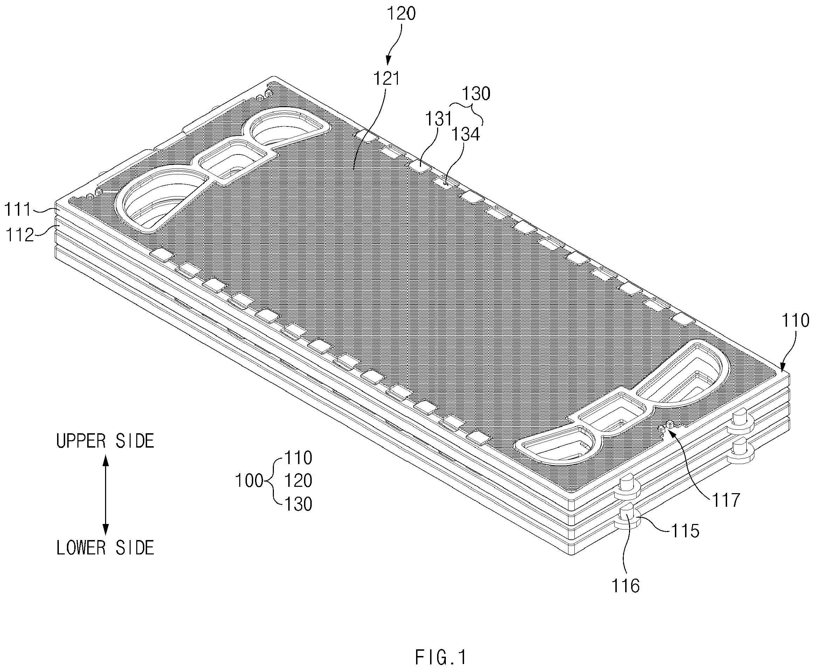

The cartridge assembly according to the first embodiment of the present disclosure is a cartridge assembly, in which cartridges that may accommodate fuel cells in interiors thereof are stacked and assembled. FIG. 1 is a view illustrating the cartridge assembly according to the first embodiment of the present disclosure.

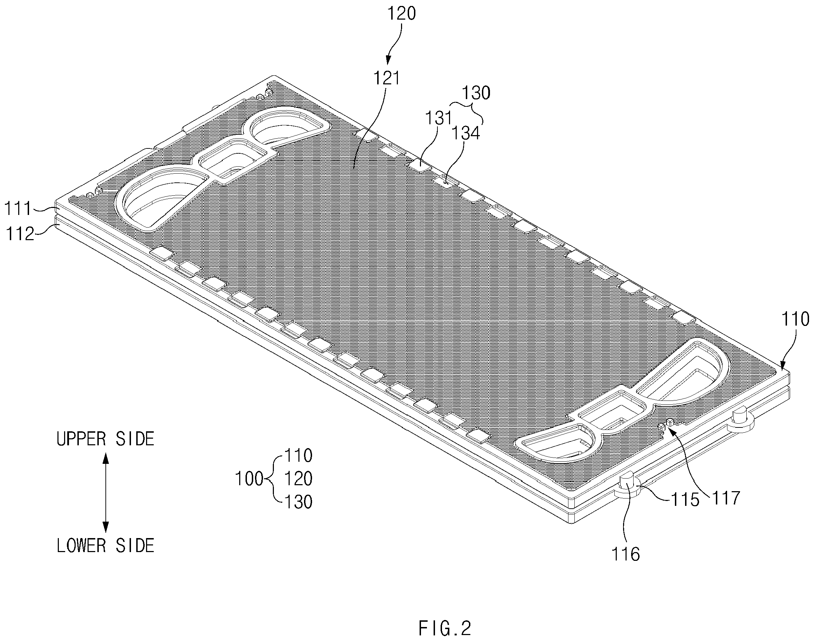

The cartridge assembly according to the first embodiment of the present disclosure may include a cartridge 100. FIG. 2 is a view illustrating the cartridge 100 of the cartridge assembly according to the first embodiment of the present disclosure.

A plurality of cartridges 100 may be provided to be stacked along an upward/downward direction. That is, the cartridges 100 may be aligned and stacked upwards and downwards to form the cartridge assembly.

The cartridge 100 may include a body part 110, a cover part 120, and a connection part 130.

### Body Part 110

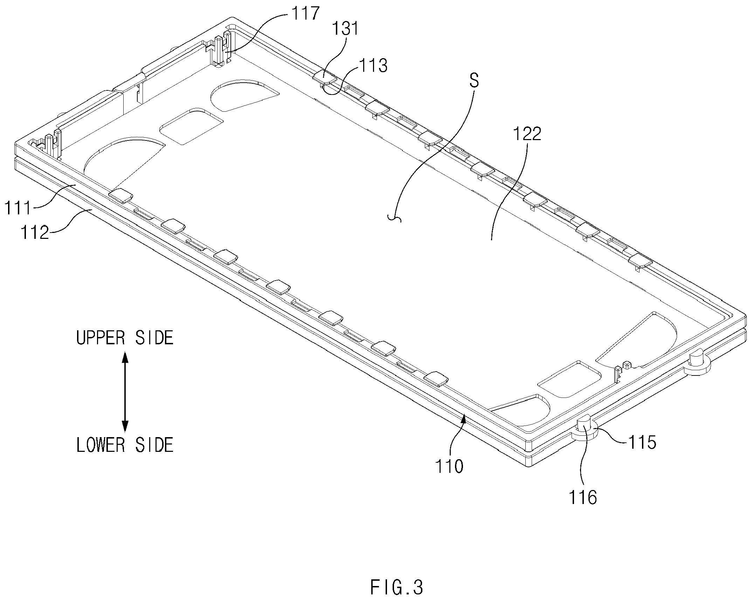

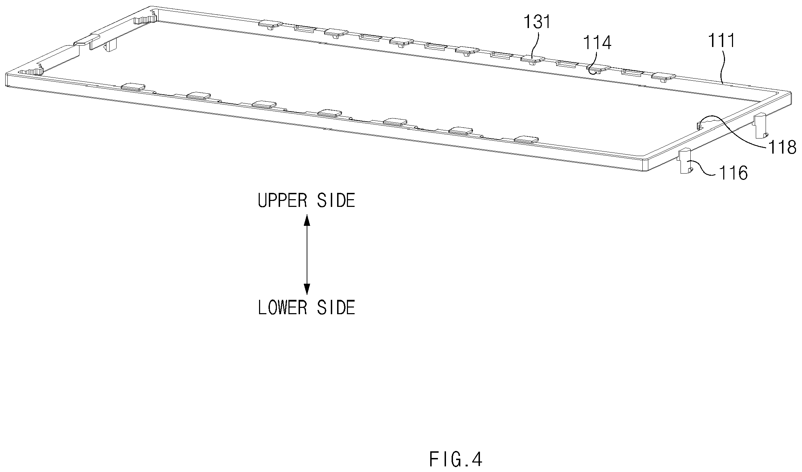

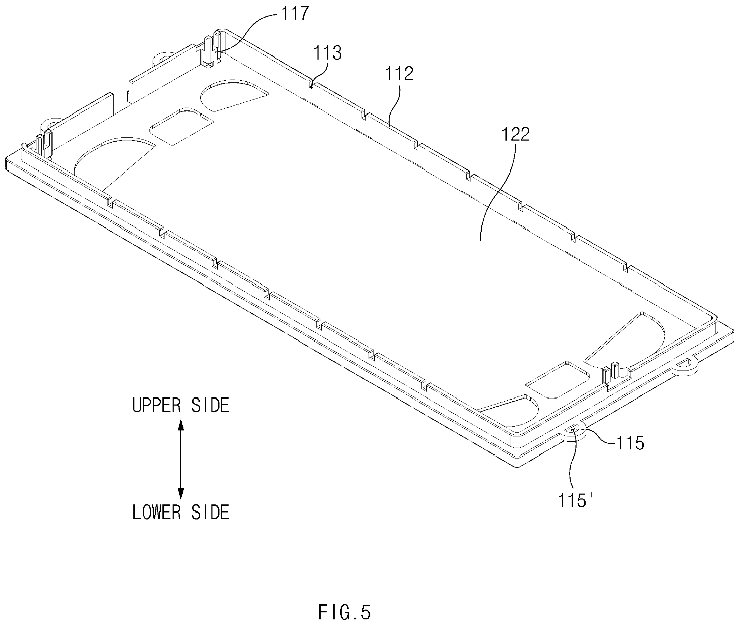

FIG. 3 is a view illustrating a state, in which an upper cover, which will be described below, is removed in FIG. 2. FIG. 4 is a view illustrating the upper body of the cartridge assembly according to the first embodiment of the present disclosure. FIG. 5 is a view illustrating a lower body 112 and a lower cover 122 of the cartridge assembly according to the first embodiment of the present disclosure.

The body part 110 may include an upper body 111 and the lower body 112. The upper body 111 may have a shape that is opened upwards and downwards. The lower body 112 may have a shape that is opened upwards and downwards.

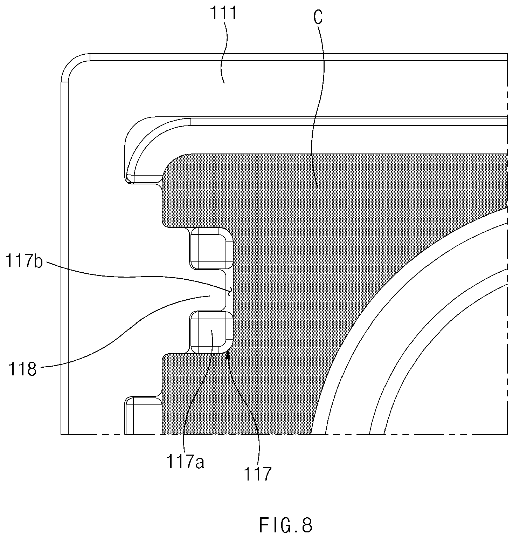

As illustrated in FIG. 3, the lower body 112 may be coupled to the upper body 111 to define an interior space "S", in which cells "C" (FIG. 8) may be stacked upwards and downwards, in an interior thereof, together with the upper body 111. The cells "C" may have a shape corresponding to a shape of the interior space "S". The cells "C" may be fuel cells.

As an example, five to ten cells may be stacked in the interior space "S", but the present disclosure is not limited thereto and the number of the cells that may be stacked may be changed according to a necessity of a user.

Meanwhile, the upper body 111 may be disposed to surround an upper side of a side surface of the lower body 112. This may mean that the upper body 111 has a shape that surrounds the lower body 112 from a lateral side.

Meanwhile, as illustrated in FIG. 5, a coupling recess 113 that is recessed downwards may be formed on an upper side of the lower body 112. A plurality of coupling recesses 113 may be formed along an upper periphery of the lower body 112.

Furthermore, as illustrated in FIG. 4, a coupling boss member 114 may be formed in the upper body 111. The coupling boss member 114 may protrude inwards from a location of an inner surface of the upper body 111, which corresponds to the coupling recess 113 formed in the lower body 112.

The coupling boss member 114 may be configured to be inserted into the coupling recess 113. As the coupling boss member 114 is inserted into the coupling recess 113, the upper body 111 and the lower body 112 may be engaged with each other in the cartridge 100.

The upper body 111 and the lower body 112 may be pressed and attached to each other along an upward/downward direction. They may maintain a state, in which they are not pressed and attached to each other upwards and downwards, to stably dispose the cells, before the cells are not completely disposed in the interior space. Thereafter, after the cells are completely disposed in the interior space, a distance between the upper body 111 and the lower body 112 may be reduced by pressing and attaching them. Accordingly, a sealing performance of the cartridge that keeps the cells may be enhanced.

The body part 110 may include a lower fastening member 115 and an upper fastening member 116. The lower fastening member 115 may protrude laterally from the lower body 112, and a fastening hole 115' that passes therethrough upwards and downwards may be formed at a middle portion of the lower fastening member 115. The upper fastening member 116 may protrude from the upper body 111, may extend downwards, and may be snap-fitted with the fastening hole 115'. That is, the upper fastening member 116 may be restrained from being moved upwards when a portion of the upper fastening member 116 passes through the fastening hole 115' after approaching toward the fastening hole 115' from a top. As an example, because the upper fastening member is elastic, it may be restrained from being moved upwards after passing through the fastening hole 115' and returning to an original shape, the upper fastening member may have a retractable boss, and it may be elastically supported as the boss proceeds and retracts.

The upper fastening member 116 may approach the lower fastening member 115 at the same time when the upper body 111 and the lower body 112 are pressed and attached to each other. The upper fastening member 116 and the lower fastening member 115 may function to maintain the pressing and attaching of the upper body 111 and the lower body 112.

The number of the lower fastening members 115 and the number of the upper fastening members 116 may correspond to each other. As an example, as illustrated in FIG. 2, four lower fastening members 115 and four upper fastening members 116 may be formed.

### Cover Part 120

The cover part 120 may function to maintain a sealing state of the cells located in the interior space "S" and perform a function for electrical conduction. The cover part 120 may include an upper cover 121 and the lower cover 122. The upper cover 121 may cover an upper opening. The upper opening may be formed on an upper side of the upper body 111. An upper hole may be formed in the upper cover 121. A path, along which air and hydrogen are supplied to the fuel cell, may be secured through the upper hole, and a path, along which water is discharged after a reaction, may be secured.

The lower cover 122 may cover an lower opening. The lower opening may be formed on a lower side of the lower body 112. A lower hole may be formed in the lower cover 122. The lower hole may perform the same function as that of the upper hole.

### Connection Part 130

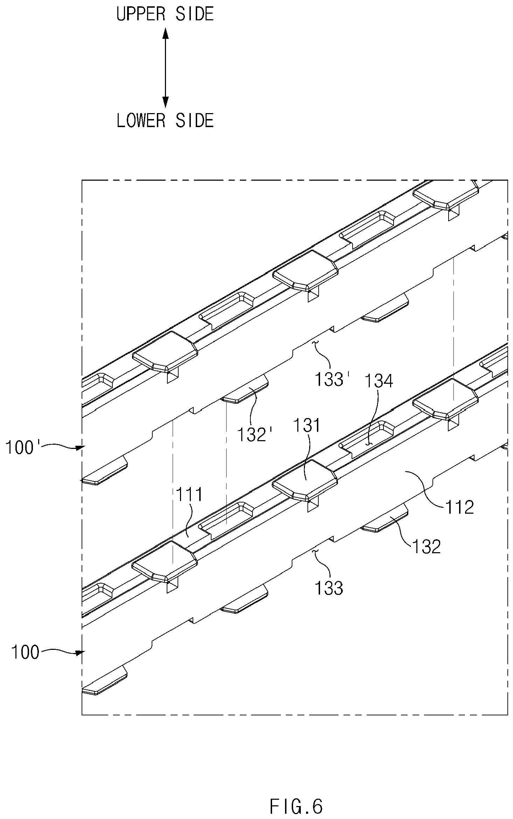

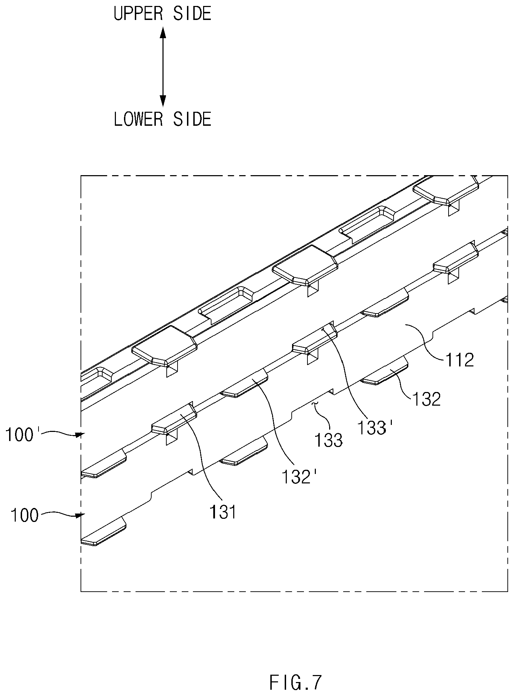

FIG. 6 is a view illustrating the connection part in a state before two cartridges disposed upwards and downwards are connected to each other. FIG. 7 is a view illustrating the connection part in a state after the two cartridges disposed upwards and downwards are connected to each other. The connection part 130 may be a configuration for coupling the cartridge 100 and another cartridge 100' disposed on an upper side or a lower side to be adjacent thereto.

The connection part 130 may have various shapes. That is, the connection part 130 only has to be a configuration for fixedly coupling any one cartridge 100 to anther cartridge 100' disposed on an upper side or a lower side to be adjacent thereto, and it is not always necessary for the body part 110 and the cover part 120 to be separate parts. That is, the connection part 130 may be a portion of the body part 110 or the cover part 120.

Hereinafter, the connection part 130 of the cartridge assembly according to the first embodiment will be described in detail.

### Boss areas and Recess Areas

The connection part 130 may include an upper boss area 131 and a lower boss area 132. The upper boss area 131 may have a shape that protrudes upwards from an upper side of the upper body 111. Furthermore, the upper boss area 131 may protrude from the upper side of the upper body 111 toward the upper opening. This may mean that a portion of the upper boss area 131 is located on an upper side of the upper cover 121. Because a portion of the upper boss area 131 is located on an upper side of the upper cover 121, the upper cover 121 may be prevented from deviating upwards.

The lower boss areas 132 and 132' may have a shape that protrudes downwards from a lower side of the lower body 112. Furthermore, the lower boss areas 132 and 132' may protrude from the lower side of the lower body 112 toward the lower opening. This may mean that a portion of the lower boss area 132 and 132' is located on a lower side of the lower cover 122. Because a portion of the lower boss area 132 and 132' is located on the lower side of the lower cover 122, the lower cover 122 may be prevented from deviating downwards.

Furthermore, the upper boss area 131 may be integrally formed with the upper body 111, and the lower boss area 132 may be integrally formed with the lower body 112.

The connection part 130 may include lower recess areas 133 and 133' and an upper recess area 134. The lower recess areas 133 and 133' may be formed at locations of the lower body 112 and the lower cover 122 corresponding to the upper boss area 131 to be recessed. With reference to FIGS. 6 and 7, the upper boss area 131 may be inserted into the lower recess area 133' of any one cartridge 100'. Here, the upper boss area 131 may be the upper boss area 131 of the cartridge 100 located on a lower side of any one cartridge 100' to be adjacent thereto.

The upper recess area 134 may be formed at a location of the upper body 111 and the upper cover 121 corresponding to the lower boss area 132 to be recessed. With reference to FIGS. 6 and 7, the lower boss area 132' may be inserted into the upper recess area 134. Here, the lower boss area 132', as illustrated in FIGS. 6 and 7, may be the lower boss area 132' of another cartridge 100' located on an upper side to be adjacent.

A plurality of upper boss areas 131 and a plurality of upper recess areas 134 may be formed. Furthermore, the upper boss areas 131 and the upper recess areas 134 may be alternately arranged along an upper periphery of the upper body 111.

A plurality of lower boss areas 132 and a plurality of lower recess areas 133 may be formed. Furthermore, the lower boss areas 132 and the lower recess areas 133 may be alternately arranged along a lower periphery of the lower body 112.

### Alignment Member 117

FIG. 8 is a view illustrating the alignment member and the cells, viewed from a top.

The body part 110 may further include the alignment member 117. The alignment member 117 may protrude inwards from the lower body 112, and may have a shape corresponding to an area, in which the cells "C" are recessed laterally. For example, when it is assumed that front left and right corners of the cell has an inwardly recessed shape, the alignment member 117 may protrude in a shape corresponding to the recessed area. The alignment member 117 may have a structure for aligning and stacking the cells "C" in the interior space "S". FIG. 8 illustrates a state, in which the cells "C" are aligned by the alignment member 117.

As an example, as illustrated in FIG. 3, three alignment members 117 may be formed, but the present disclosure is not limited thereto and the number thereof may be different according to the shape of the cells "C". As illustrated in FIG. 3, two alignment members may be provided at corners of a lateral circumference of the lower body 112, respectively, and the remaining alignment member may be provided at a location that is spaced apart from the corners of the lateral circumference of the lower body 112.

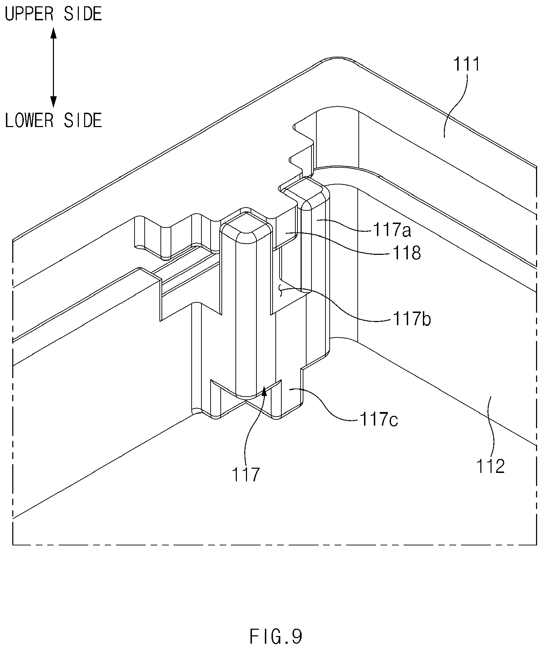

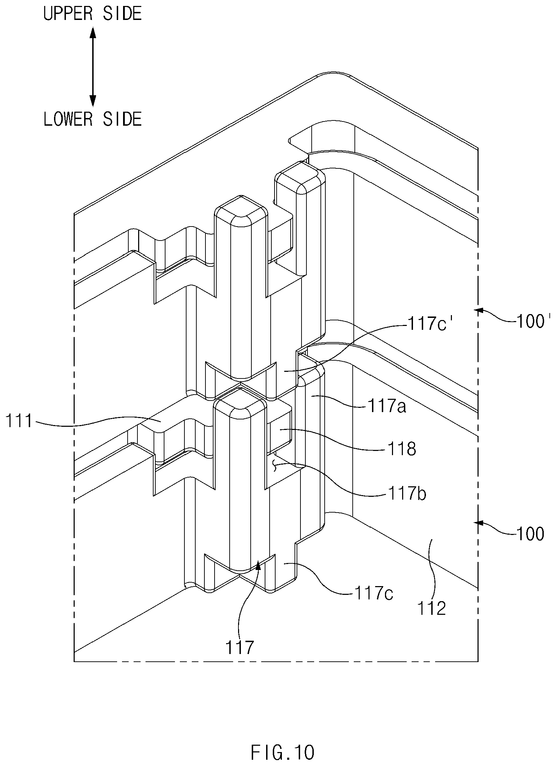

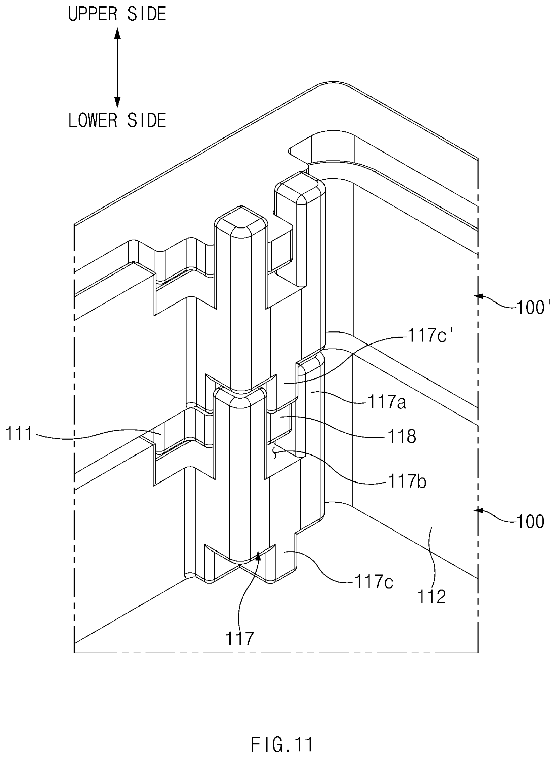

Meanwhile, the alignment members 117 also may function as the connection part. FIG. 9 is a view illustrating the alignment member and a second insertion part positioned in a state before the upper body and the lower body are pressed and attached. FIG. 10 is a view illustrating a state before the alignment members of two cartridges disposed upwards and downwards are connected to each other. FIG. 11 is a view illustrating a state after the alignment members of the two cartridges disposed upwards and downwards are connected to each other. Hereinafter, a detailed structure, by which the alignment members 117 are allowed to function as the connection part.

The alignment member 117 may include an extension part 117a, an insertion recess 117b, and a first insertion part 117c. The extension part 117a may have a shape that extends upwards. A pair of extension parts 117a may be provided to be spaced horizontally apart from each other. The insertion recess 117b may be formed between the pair of spaced extension parts 117a. The first insertion part 117c may have a structure that is to be inserted into the insertion recess 117b of the alignment member 117 of another cartridge 100 disposed on a lower side thereof to be adjacent thereto. The first insertion part 117c may have a shape corresponding to the insertion recess 117b, and may protrude downwards from a location corresponding to the insertion recess 117b. As a whole, the alignment members 117 may have a shape that is similar to a Y shape.

Meanwhile, the body part 110 may further include a second insertion part 118. The second insertion part 118 may be a part that protrudes inwards from an upper side of the upper body 111 and corresponds to the insertion recess 117b.

As illustrated in FIG. 11, the second insertion part 118 may be disposed on a lower side of a first insertion part 117c' of another cartridge 100' disposed on an upper side thereof. That is, the first insertion part 117c' of the other cartridge 100' disposed on the upper side may be positioned on an upper side of the second insertion part 118 after the second insertion part 118 is inserted into the insertion recess 117b. To insert both of the second insertion part 118 and the first insertion part 117c' into the insertion recess 117b, an upward/downward length of the insertion recess 117b may be made to be larger than sum of an upward/downward length of the second insertion part 118 and an upward/downward length of the first insertion part 117c.

In summary, the upper boss area 131 of the cartridge 100 of the cartridge assembly according to the first embodiment of the present disclosure is inserted into the lower recess area 133' (FIG. 6) of another cartridge 100' disposed on an upper side thereof to be adjacent thereto, whereas the first insertion part 117c' of another cartridge 100' disposed on an upper side thereof to be adjacent thereto is inserted into the insertion recess 117b of the alignment member 117. Then, the lower boss area 132' of the other cartridge 100' disposed on the upper side thereof to be adjacent thereto may be inserted into the upper recess area 134.

Similarly, the lower boss area 132 of the cartridge 100 of the cartridge assembly according to the first embodiment of the present disclosure is inserted into the upper recess areas of another cartridge disposed on a lower side thereof to be adjacent thereto, whereas the first insertion part 117c of the alignment member 117 is inserted into the insertion recess of the alignment member of another cartridge disposed on a lower side to be adjacent thereto.

### <Cartridge Assembly according to Second Embodiment>

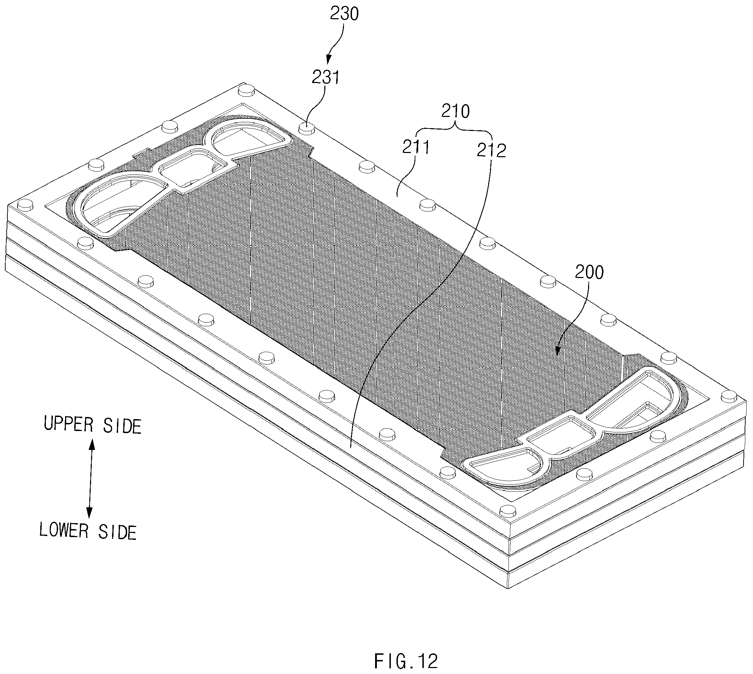

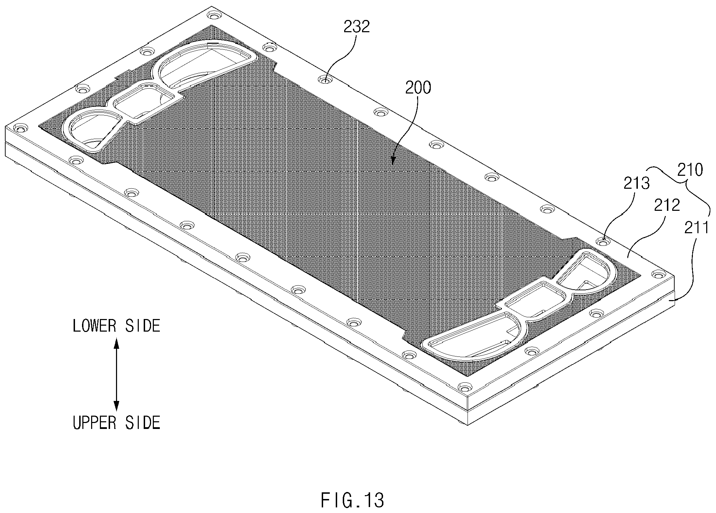

FIG. 12 is a conceptual view illustrating a cartridge assembly according to a second embodiment of the present disclosure. FIG. 13 is a view illustrating a cartridge of the cartridge assembly according to the second embodiment of the present disclosure. Hereinafter, the cartridge assembly according to the second embodiment of the present disclosure will be described in detail with reference to FIGS. 12 to 13. For reference, in FIG. 13, a state, in which the upper and lower sides are reversed, is illustrated for helping understandings.

The cartridge assembly according to the second embodiment is different from the cartridge assembly according to the first embodiment particularly in that a shape of a connection part 230 has a bolt shape. The same or corresponding reference numerals are given to configurations that are the same as or correspond to those of the cartridge assembly according to the first embodiment, and a detailed description thereof will be omitted.

The connection part 230 may have a bolt structure. The connection part 230 may include a bolt head 231 and a bolt body 232. The bolt head 231 may protrude to an upper side of an upper body 211. The bolt body 232 may extend downwards from the bolt head 231.

A body part 210 may include a bolt insertion hole 213. The bolt insertion hole 213 may be a hole that passes through the upper body 211 and a lower body 212. The bolt body 232 may be inserted into the bolt insertion hole 213.

An area of the bolt head 231 may be larger than that of the bolt insertion hole 213. Because the area of the bolt head 231 is larger than that of the bolt insertion hole 213, the bolt head 231 may be prevented from being inserted into the bolt insertion hole 213.

An upward/downward length of the bolt insertion hole 213 may be larger than that of the bolt body 232. Because the upward/downward length of the bolt insertion hole 213 is larger than that of the bolt body 232, a lower portion of the bolt insertion hole 213 may be left as an empty space. A bolt head of another cartridge disposed on a lower side to be adjacent thereto may be inserted into the empty space of the bolt insertion hole 213. Though the structure, the cartridges 200 according to the second embodiment may be stacked to constitute the cartridge assembly according to the second embodiment.

### <Cartridge Assembly according to Third Embodiment>

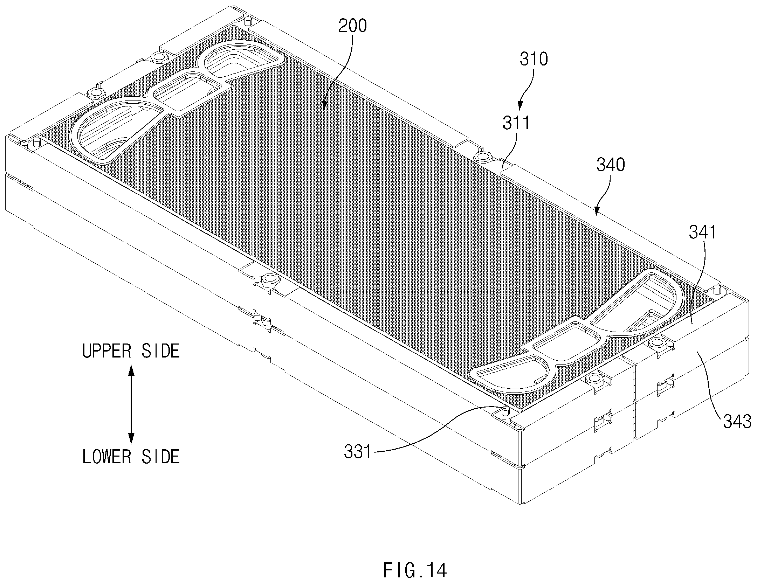

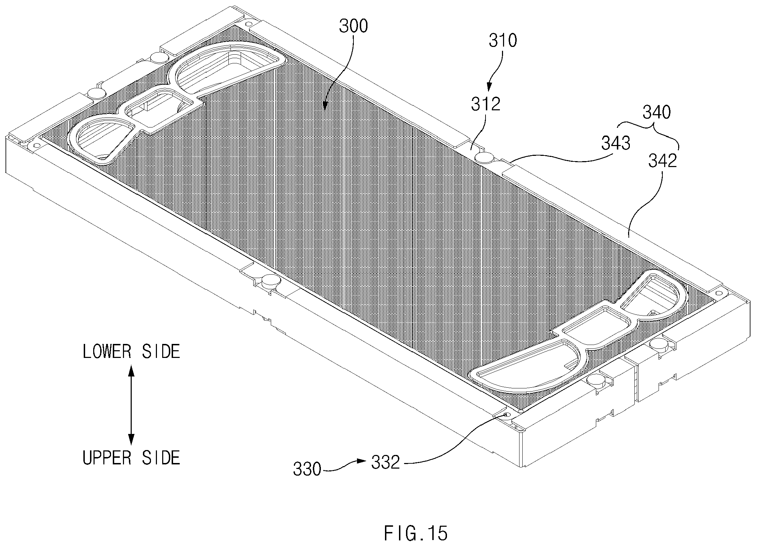

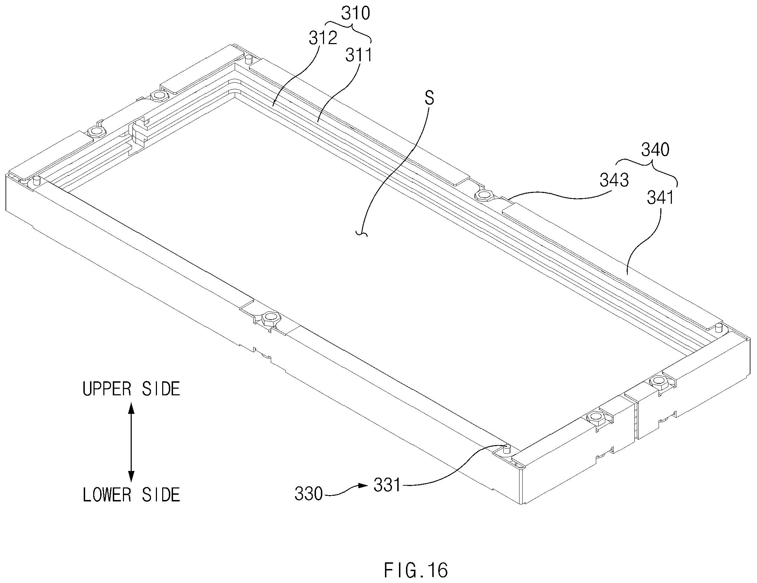

FIG. 14 is a conceptual view illustrating a cartridge assembly according to a third embodiment of the present disclosure. FIG. 15 is a view illustrating a cartridge of the cartridge assembly according to the third embodiment of the present disclosure. FIG. 16 is a view illustrating a state, in which an upper cover and a lower cover are removed from the cartridge of the cartridge assembly according to the third embodiment of the present disclosure. Hereinafter, the cartridge assembly according to the third embodiment of the present disclosure will be described in detail with reference to FIGS. 14 to 16. For reference, in FIG. 15, a state, in which the upper and lower sides are reversed, is illustrated for helping understandings.

The cartridge assembly according to the third embodiment is different from the cartridge assembly according to the first embodiment particularly in a shape of a connection part 330 and presence of a tension bar 340. The same or corresponding reference numerals are given to configurations that are the same as or correspond to those of the cartridge assembly according to the first embodiment, and a detailed description thereof will be omitted.

The cartridge of the cartridge assembly according to the third embodiment of the present disclosure may include the tension bar 340. The tension bar 340 may be configured to surround a periphery of a body part 310. The tension bar 340 may be a member that maintains pressing and attaching of an upper body 311 and a lower body 312 of the body part 310.

The tension bar 340 may include an upper contact part 341, a lower contact part 342, and an elastic part 343. The upper contact part 341 may be a part that contacts an upper surface of the upper body 311. The lower contact part 342 may be a part that contacts a lower surface of the lower body 312. The elastic part 343 may elastically connect the upper contact part 341 and the lower contact part 342. Due to the elasticity of the elastic part 343, the pressing and attaching of the upper body 311 and the lower body 312 may be maintained. A cross-sectional shape of the tension bar 340 when the tension bar 340 is cut vertically may be similar to a shape obtained by rotating a 'U' shape by 90 degrees.

Meanwhile, the connection part 330 may include a connection boss 331 and a connection recess 332. The connection boss 331 may protrude upwards from the upper body 311. The connection recess 332 may be formed at a location of the lower body 312, which corresponds to the connection boss 331, to have a shape corresponding to the connection boss 331. This may mean that a connection boss of another cartridge disposed on a lower side to be adjacent thereto may be inserted into the connection recess 332 of a cartridge 300. Though the structure, the cartridges 300 according to the third embodiment may be stacked to constitute the cartridge assembly according to the third embodiment.

Meanwhile, the connection boss 331 may be formed by an upper noncontact area. The upper noncontact area may mean an area of the upper body 311, which does not contact the upper contact part 341. Furthermore, the connection recess 332 may be formed by a lower noncontact area. The lower noncontact area may mean an area of the lower body 312, which does not contact the lower contact part 342.

### <Cartridge Assembly according to Fourth Embodiment>

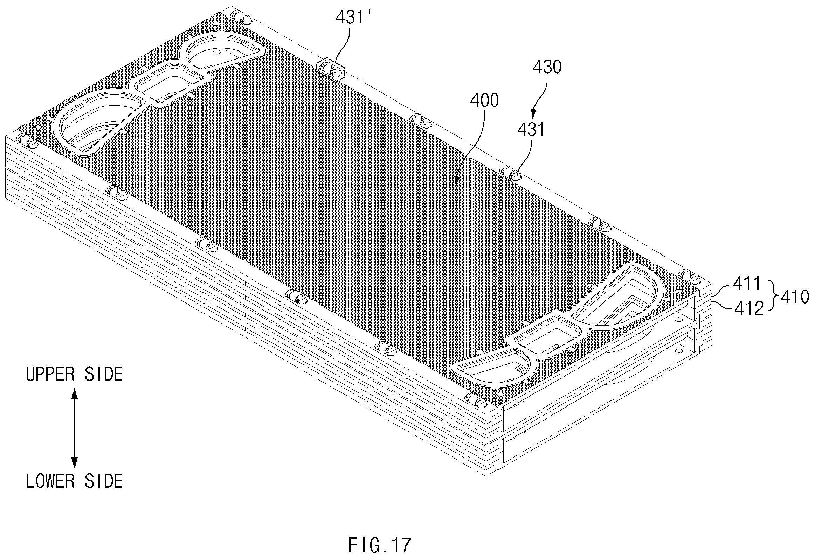

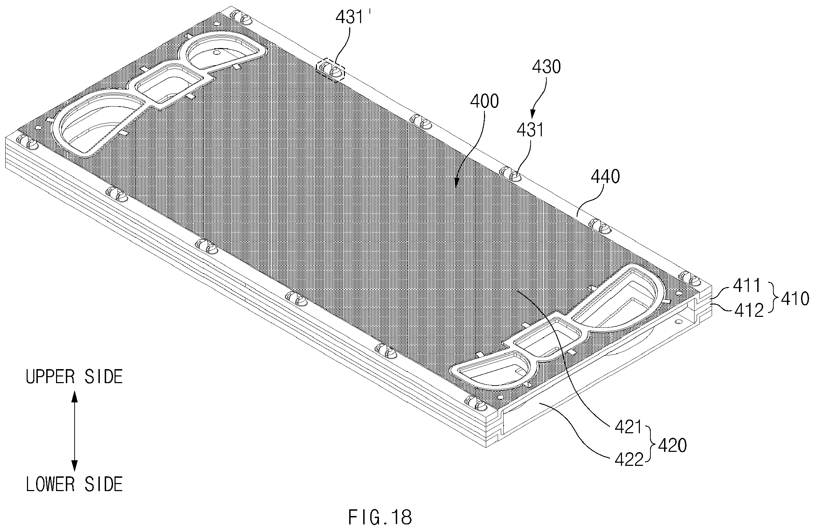

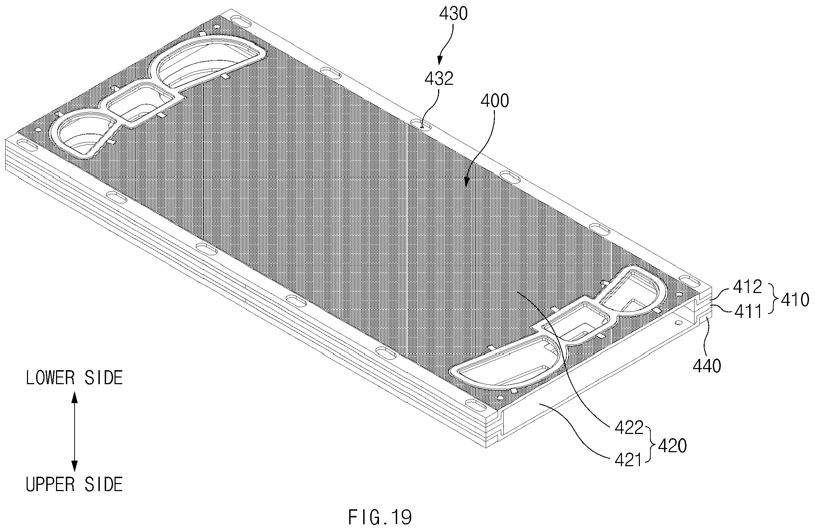

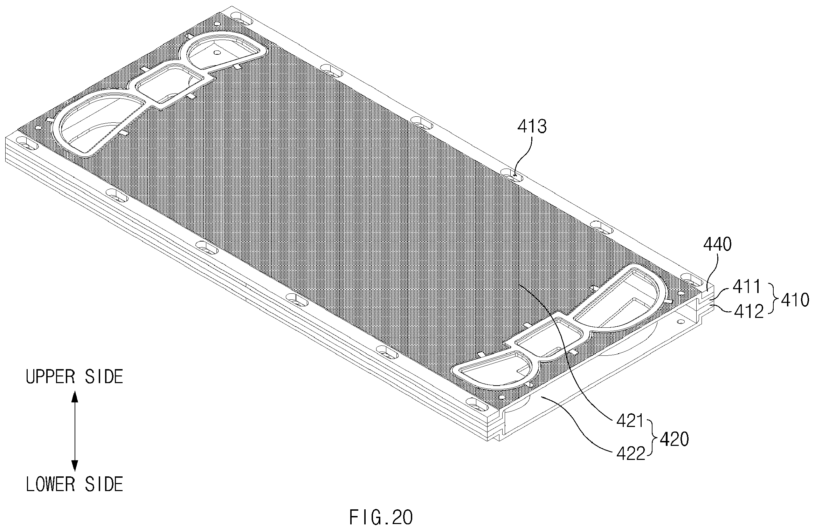

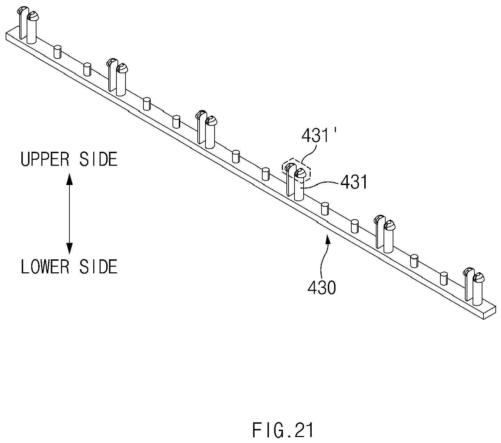

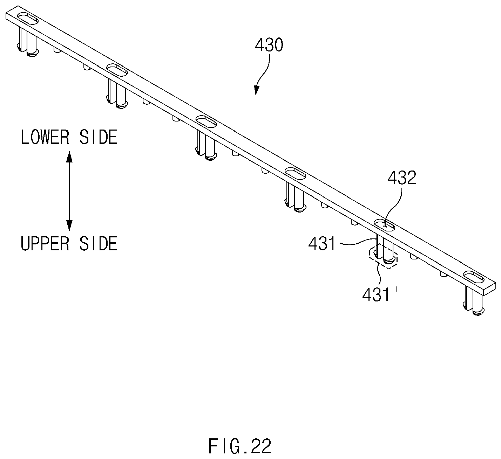

FIG. 17 is a conceptual view illustrating a cartridge assembly according to a fourth embodiment of the present disclosure. FIG. 18 is a view illustrating a cartridge of the cartridge assembly according to the fourth embodiment of the present disclosure. FIG. 19 is a view obtained by reversing FIG. 18 upwards and downwards. FIG. 20 is a view of a state, in which a connection part is removed in FIG. 18. FIG. 21 is a view illustrating the connection part of the cartridge assembly according to the fourth embodiment of the present disclosure. FIG. 22 is a view obtained by reversing FIG. 21 upwards and downwards.

Hereinafter, the cartridge assembly according to the fourth embodiment of the present disclosure will be described in detail with reference to FIGS. 17 to 22. The cartridge assembly according to the fourth embodiment is different from the cartridge assembly according to the first embodiment particularly in a shape of a connection part 430. The same or corresponding reference numerals are given to configurations that are the same as or correspond to those of the cartridge assembly according to the first embodiment, and a detailed description thereof will be omitted.

A body part 410 may include a through-hole 413. The through-hole 413 may pass through side surfaces of an upper body 411 and a lower body 412 in an upward/downward direction. As an example, the through-hole 413 may have a slot shape when viewed from a top, and this is merely an example and the through-hole 413 may have various shapes. A plurality of through-holes 413 may be formed.

Meanwhile, the through-hole 413 may be formed to pass through a cover part 420. In this case, the cover part 420 may include a portion that overlaps the body part 410, and the through-hole 413 may be formed at the portion, at which the body part 410 and the cover part 420 overlap each other.

Meanwhile, an upper cover 421 may be formed such that opposite ends thereof are stepped downwards. Support members 440 that are to be disposed to correspond to a height of the upper cover 421 may be disposed on an upper side of opposite ends of the upper cover 421. In this case, the through-hole 413 may be formed to pass through the support members 440.

Meanwhile, a lower cover 422 may be formed such that opposite ends thereof are stepped upwards. Connection parts 430 may be disposed on a lower side of opposite ends of the lower cover 422.

The connection part 430 may include a snap-fit member 431. The snap-fit member 431 may be snap-fitted while passing through the through-hole 413 upwards. As an example, an upper end of the snap-fit member 431 may be restrained from being moved downwards as it is pressed by the upper body 411 and the lower body 412 that define the through-hole 413 before passing through the through-hole 413, is restored by a restoring force after it passes through the through-hole 413, and protrude to an outside of the through-hole 413. The number of the snap-fit members 431 may correspond to the number of the through-holes 413.

The snap-fit member 431 may include a protrusion area 431'. The protrusion area 431' may be an area that protrudes to an upper side of the upper body 411. The protrusion area 431' may be configured to be inserted into a through-hole 413 of another cartridge disposed on an upper side thereof to be adjacent thereto.

Meanwhile, an upward/downward length of the through-hole 413 may be smaller than that of the snap-fit member 431. Because the upward/downward length of the through-hole 413 is smaller than that of the snap-fit member 431, the protrusion area 431' may be formed. As an example, the upward/downward length of the through-hole 413 may correspond to a value obtained by subtracting an upward/downward length of the protrusion area 431' from the upward/downward length of the snap-fit member 431.

Meanwhile, as illustrated in FIG. 22, the connection part 430 may include a connection opening 432 that is disposed on a lower side of the snap-fit member 431 and is opened downwards. A protrusion area of another cartridge disposed on a lower side to be adjacent thereto may be inserted into the connection opening 432. Then, the upward/downward length of the connection opening 432 may correspond to the upward/downward length of the protrusion area 431'. Though the structure, cartridges 400 according to the fourth embodiment may be stacked to constitute the cartridge assembly according to the fourth embodiment.

According to the present disclosure, because five to ten unit cells are kept in one cartridge, the cartridges may be replaced and inspected independently, and thus it may become easy to repair the stacks and it may be possible to secure a sealing state of the cells even before the stacks are coupled.

Furthermore, according to the present disclosure, because a connection part that aligns and connects the cartridges is provided, it may become easy to stack the cartridges and decrease buckling.

The above description is a simple exemplification of the technical spirits of the present disclosure, and the present disclosure may be variously corrected and modified by those skilled in the art to which the present disclosure pertains without departing from the essential features of the present disclosure. Accordingly, the embodiments disclosed in the present disclosure is not provided to limit the technical spirits of the present disclosure but provided to describe the present disclosure, and the scope of the technical spirits of the present disclosure is not limited by the embodiments. Accordingly, the technical scope of the present disclosure should be construed by the attached claims, and all the technical spirits within the equivalent ranges fall within the scope of the present disclosure.

## Claims

1. A cartridge assembly comprising:
a plurality of cartridges stacked in an upward and downward direction, wherein each of the plurality of cartridges includes:
a body part having an upper body opened upwards and downwards, and a lower body opened upwards and downwards, and coupled to the upper body to define an interior space, in which cells are stacked upwards and downwards, together with the upper body; a cover part having an upper cover configured to cover an upper opening formed on an upper side of the upper body, and a lower cover configured to cover a lower opening formed on a lower side of the lower body; and
a connection part fixedly coupled to another cartridge disposed on an upper side or a lower side of the cartridge to be adjacent thereto.

2. The cartridge assembly of claim 1, wherein the connection part includes:
an upper boss area having a shape that protrudes upwards from the upper side of the upper body; and
a lower boss area having a shape that protrudes downwards from the lower side of the lower body,
wherein the upper boss area protrudes from an upper surface of the upper body toward the upper opening, and
wherein the lower boss area protrudes from a lower surface of the lower body toward the lower opening.

3. The cartridge assembly of claim 2, wherein the connection part includes:
a lower recess area formed at a location of the lower body and the lower cover, which corresponds to a location of the upper boss area, to be recessed, and into which the upper boss area is inserted; and
an upper recess area formed at a location of the upper body and the upper cover, which corresponds to a location of the lower boss area, to be recessed, and into which the lower boss area is inserted.

4. The cartridge assembly of claim 3, wherein a plurality of upper boss areas and a plurality of upper recess areas are formed, and are alternately arranged along an upper periphery of the upper body.

5. The cartridge assembly of any one of claims 1 to 4, wherein the upper body is disposed on an upper side of the lower body to surround side surfaces of the lower body, and
wherein the body part includes:
a coupling recess formed to be recessed downwards from the upper side of the lower body; and
a coupling boss member protruding inwards from a location of the upper body, which corresponds to the coupling recess, and inserted into the coupling recess.

6. The cartridge assembly of any one of claims 1 to 5, wherein the body part further includes:
an alignment member protruding inwards from the lower body, and having a shape corresponding to an area, in which the cell is recessed.

7. The cartridge assembly of claim 6, wherein the alignment member includes:
a pair of extension parts having a shape extending upwards, and spaced apart from each other;
an insertion recess formed between the pair of extension parts; and
a first insertion part having a shape corresponding to an insertion recess of an alignment member of another cartridge disposed on the lower side of the cartridge to be inserted into the insertion recess, and protruding downwards from a location corresponding to the insertion recess.

8. The cartridge assembly of claim 7, wherein the body part further includes:
a second insertion part protruding inwards from the upper side of the upper body, and having a shape corresponding to the insertion recess,
wherein the second insertion part is disposed on a lower side of a first insertion part of another cartridge disposed on the upper side of the cartridge, and
wherein a length of the insertion recess is larger than a sum of a length of the second insertion part and a length of the first insertion part in the upward and downward direction.

9. The cartridge assembly of any one of claims 1 to 8, wherein the body part further includes:
a lower fastening member protruding laterally from the lower body, and having a fastening hole passing therethrough upwards and downwards, at a middle portion thereof; and
an upper fastening member protruding from the upper body, extending downwards, and configured to be snap-fitted with the fastening hole.

10. The cartridge assembly of any one of claims 1 to 9, wherein the connection part includes:
a bolt head protruding toward the upper side of the upper body; and
a bolt body extending downwards from the bolt head, and configured to be inserted into a bolt insertion hole passing through the upper body and the lower body,
wherein an area of the bolt head is larger than an area of the bolt insertion hole, and
wherein a length of the bolt insertion hole is larger than a length of the bolt body in the upward and downward direction.

11. The cartridge assembly of any one of claims 1 to 10, wherein the cartridge further includes:
a tension bar configured to surround a periphery of the body part, and
the tension bar includes:
an upper contact part contacting an upper surface of the upper body;
a lower contact part contacting a lower surface of the lower body; and
an elastic part elastically connecting the upper contact part and the lower contact part.

12. The cartridge assembly of claim 11, wherein the connection part includes:
a connection boss protruding upwards from the upper body; and
a connection recess formed to have a shape corresponding to the connection boss, at a location of the lower body, which corresponds to the connection boss,
wherein the connection boss is formed in an upper noncontact area that is an area of the upper body, which does not contact the upper contact part, and
wherein the connection recess is formed in a lower noncontact area that is an area of the lower body, which does not contact the lower contact part.

13. The cartridge assembly of any one of claims 1 to 12, wherein a through-hole is formed on a side surface of each of the upper body and the lower body to pass therethrough in an upward/downward direction,
wherein the connection part includes:
a snap-fit member passing through the through-hole upwards and snap-fitted with the through-hole, and
wherein the snap-fit member includes a protrusion area protruding upwards from the upper body.

14. The cartridge assembly of claim 13, wherein the connection part further includes:
a connection opening formed on a lower side of the snap-fit member, and opened downwards, and
wherein the connection opening is configured such that a protrusion area of another cartridge disposed on the lower side of the cartridge to be adjacent thereto is inserted thereinto.

15. The cartridge assembly of claim 14, wherein a length of the connection opening corresponds to a length of the protrusion area in the upward and downward direction; and
wherein a length of the through-hole is shorter than a length of the snap-fit member in the upward and downward direction.
